(19) Europäisches Patentamt / European Patent Office / Office européen des brevets

(11) **EP 4 019 926 A1**

(12) # EUROPEAN PATENT APPLICATION

(43) Date of publication:
**29.06.2022 Bulletin 2022/26**

(21) Application number: **20000480.2**

(22) Date of filing: **22.12.2020**

(51) International Patent Classification (IPC):
**G01L 5/22** *(2006.01)*    **G01L 1/18** *(2006.01)*
**B25J 13/08** *(2006.01)*    **G01L 1/20** *(2006.01)*
**G01L 5/162** *(2020.01)*

(52) Cooperative Patent Classification (CPC):
**G01L 1/205; B25J 13/084; G01L 1/18; G01L 5/162; G01L 5/228**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.
80539 München (DE)**

(72) Inventors:
• LEE, Hyosang
  70565 Stuttgart (DE)
• KUCHENBECKER, Katherine J.
  70569 Stuttgart (DE)

(74) Representative: **Hannke Bittner & Partner
Prüfeninger Straße 1
93049 Regensburg (DE)**

Remarks:
Amended claims in accordance with Rule 137(2) EPC.

(54) **SYSTEM AND METHOD FOR SIMULTANEOUSLY SENSING CONTACT FORCE AND LATERAL STRAIN**

(57)    A tactile sensing system having a sensor component which comprises a plurality of layers stacked along a normal axis Z and a detection unit electrically connected to the sensor component, wherein the sensor component comprises a first layer, designed as a piezoresistive layer, a third layer, designed as a conductive layer which is electrically connected to the detection unit, and a second layer, designed as a spacing layer between the first layer and the third layer, wherein the first layer comprises a plurality of electrodes electrically connected to the detection unit, wherein at least one contact force along the normal axis Z on the sensor component is detectable by the detection unit due to a change of a current distribution between the first layer and the third layer, wherein at least one lateral strain on the sensor component is detectable by the detection unit due to a change of the resistance distribution change in the piezoresistive first layer.

Fig. 1a

EP 4 019 926 A1

**Description**

The invention relates to a tactile sensing system having a sensor component which comprises a plurality of layers stacked along a normal axis Z and a control unit electrically connected to the sensor component. The invention further relates to a method to operate a tactile sensing system.

Such a tactile sensing system may be facilitated as a human-like electronic skin, which is an essential component of autonomous systems as the handling of physical contact becomes critical in many applications. Although many tactile sensors have been developed for robotic hands and fingers, current autonomous systems still lack tactile sensors that can cover large and curved surfaces of robots. Robots need to have a good sense of touch in order to function in cluttered everyday environments, which are usually unstructured. Robotic systems require tactile sensors that are able to measure their intentional and unintentional contacts with humans, other robots, and inanimate objects, as well as the deformations of the robot's own body parts, such as flexion of a soft joint. Because external physical contact and internal deformations can occur at any location, these tactile sensors need to cover all exposed surfaces of a robot, not just the hands.

Similar to human skin, the specifications required for a tactile sensor strongly depend on the part of the robot's body on which it will be mounted. For instance, the tactile sensors on a robot finger demand high spatial resolution and sensitivity to both normal and shear forces for object identification, grasping, and manipulation. In contrast, the tactile sensors on a robot's arm surfaces need large-area coverage, mechanical compliance, manufacturability, sensitivity to external contacts, physical robustness, and reliability. Most existing tactile sensing approaches were designed for the fingertips and are thus poorly suited to the distinct goals of whole-body tactile sensing.

Soft and stretchable whole-body tactile sensors have not yet been realized mainly due to the electrical wiring problem, which requires reliable connections with a large number of sensing transducers distributed across the compliant substrate. Further, to build a large-scale tactile sensor, reconstruction methods are commonly used with resistance measurements, optical cameras, magnetometers, and accelerometers. Among these methods, resistance reconstruction is advantageous in many practical aspects, such as manufacturability, durability, and repairability. So far tactile sensors based on resistance reconstruction measure only surface normal pressures. However, tactile sensors themselves can deform when they are installed on non-rigid surfaces. Estimating this self-deformation of the tactile sensor is important while continuing to detect surface normal pressures.

The objective of this invention is to provide a tactile sensing system which overcomes the above-mentioned challenges.

The problem is addressed by tactile sensing system having a sensor component which comprises a plurality of layers stacked along a normal axis Z and a detection unit electrically connected to the sensor component, wherein the sensor component comprises a first layer, designed as a piezoresistive layer or strain sensitive layer, a third layer, designed as a conductive layer or electrode layer which is electrically connected to the detection unit, and a second layer, designed as a spacing layer between the first layer and the third layer, wherein the first layer comprises a plurality of electrodes electrically connected to the detection unit, wherein at least one contact force along the normal axis Z on the sensor component is detectable by the detection unit due to a change of a current distribution between the first layer and the third layer, wherein at least one lateral strain on the sensor component is detectable by the detection unit due to a change of the resistance distribution change in the piezoresistive first layer.

The tactile sensing system is preferably a stack of layers. The layers are stacked along the normal axis Z and extend parallel to a first plane comprising a length axis X and width axis Y. The second layer is arranged along the normal axis Z above the first layer. The third layer is arranged along the normal axis Z above the second layer.

The tactile sensing system may therefore detect at least one contact force along the normal axis Z and at least one lateral strain. It is understood that the at least one contact force may act entirely parallel to the normal axis Z or that the at least one contact force may have only a component acting along the normal axis Z. The at least one lateral strain may preferably be introduced by a lateral stretch force of the sensor component, the stretch force preferably acting along a stretch direction having at least a component along the length axis X and/or the width axis Y. Alternatively or cumulatively the at least one lateral strain may preferably be introduced by a bending force, by which the sensor component, the stack of layers, and the first layer are bent out of the first plane.

Preferably, the detection unit applies a resistance reconstruction method, which allows a simultaneous detection of the at least one contact force along the normal axis Z on the sensor component and the at least one lateral strain on the sensor component. According to the invention the first layer is a piezoresistive layer. Thus, a change in the electrical resistivity is caused due to an application of mechanical force/torque that induces lateral strain. Preferably the change in the resistivity may be detected by the detection unit.

According to a preferred embodiment the sensor component comprises additional layers to the first, the second and the third layer. It is conceivable that there is at least one additional layer arranged along the normal axis Z above the third layer. It is also conceivable that there is at least one additional layer arranged along the normal axis Z underneath the first layer. Further, it is conceivable that there is at least one more layer arranged between the first and the second layer. Further, it is conceivable that there is at least one more layer arranged between the second and the third layer.

Preferably the thickness of the sensor component is in the range between a few micrometers and a few centimeters. The layers consist preferably of flexible and/or soft materials. Thus, the entire sensor component is preferably flexible and/or soft.

According to a preferred embodiment, the first layer comprises a sublayer which has piezoresistive properties, wherein the sublayer comprises a conductive fabric and/or a conductive ink and/or carbon and/or carbon nanotubes and/or graphene and/or intrinsically conducting polymers (PEDOT, PSS, Polypyrrole, etc). Preferably the sublayer may also be a combination of at least two of said materials. Preferably the plurality of electrodes of the first layer is electrically connected to said sublayer.

According to a further preferred embodiment, the conductivity of the sublayer is lower than the conductivity of the plurality of electrodes. The sublayer has therefore a high resistance in view of the plurality of electrodes. Preferably the sublayer consists of a high-resistance fabric or high-resistance textile. Advantageously the high-resistance fabric layer is woven or knitted from at least one conductive yarn and comprises a predetermined textile structure. Advantageously a change of the textile structure caused by the lateral strain causes a change in the resistance of the sublayer. Preferably said change of the resistance may be detected through the plurality of electrodes by the detection unit.

According to a further preferred embodiment the plurality of electrodes is arranged in a grid structure on the sublayer. Preferably the grid structure is formed according to a two-dimensional Bravais lattice. In a two-dimensional space, there are 5 Bravais lattices: oblique (monoclinic), rectangular (orthorhombic), centered rectangular (orthorhombic), hexagonal, and square (tetragonal). It is also conceivable that a different grid structure is applied.

According to a further preferred embodiment the third layer is made of conductive fabric or a conductive textile. Preferably the conductivity of the third layer is higher than the conductivity of the first layer or the conductivity of the sublayer of the first layer. The third layer may also be referred to as the electrode layer.

According to a further preferred embodiment the second layer is deformable along the normal axis Z. Preferably the at least one contact force along the normal axis Z causes at least one deformation. Advantageously the at least one contact force along the normal axis Z acts on at least one contact area of the second layer. Hereby the at least one contact force is transmitted through the preferably flexible third layer and, if present, through further layers on top of the third layer. The at least one contact area is located on the surface of the second area, which extends parallel to the first plane. The shape of the at least one deformation depends on the shape of the at least one contact force, which essentially extends along the normal axis Z. Preferably, due to said at least one deformation, at least one distance along the normal axis Z between the first layer and the third layer is decreased at least within the at least one contact area. Preferably said at least one deformation and/or the at least one decreased distance along the normal axis Z between the first layer and the third layer results in an increase of the conductivity between the first and the third layer, which is essentially restricted to the extent of the at least one contact area along a length axis X and a width axis Y.

Advantageously, the second layer comprises piezoresistive characteristics with regard to the at least one contact force along the normal axis Z. Thus, in a deformed state of the second layer a current flow between the first layer and the second layer is possible and/or is increased or noticeably increased. Advantageously, said current flows within the deformed contact area of the second layer. Alternatively, or cumulatively a tunneling current is established between the first layer and the third layer essentially within the contact area.

Preferably the conductivity between the first layer and the third layer is very low in the state when no contact force along the normal axis Z is applied. Preferably, the second layer is, in not deformed state, essentially insulating with regard to a current between the first layer and the third layer. Thus, there is essentially no current between the first and the second layer in case the second layer is not deformed

Preferably the conductivity of the second layer is lower than the conductivity of the first layer in cases when the second layer is not deformed. Preferably the conductivity of the second layer is lower than the conductivity of the third layer. Preferably the second layer also does not allow a current within the second layer parallel to the first layer between a first subset of electrodes from the first layer and a second subset of electrodes of the first layer. The in-plane current of the first layer is therefore essentially restricted to the sublayer of the first layer.

According to a further preferred embodiment the second layer comprises a porous structure in particular a conductive foam and/or a piezoresistive material and/or a nanocomposite and/or a tunneling material. The second layer provides therefore piezoresistive characteristics due to an incident contact force along the normal axis Z.

According to one preferred embodiment the second layer is a solid conductive foam, for instance an ESD (electrostatic discharge) material foam. Such a conductive foam is an object formed by electrically insulating trapping pockets. Preferably the trapping pockets are formed in a conductive material. A mechanical force causes a deformation which increases the contact areas in the foam. By this the conductivity is increased.

According to a further preferred embodiment the spacer layer is deformed due to the at least one contact force. Due to this deformation a local distance between the first layer and the second layer is decreased. Such a decrease of the distance causes an increase in the tunneling probability between the first and the third layer and therefore a local tunneling current defined to the special position of the deformation.

It is also conceivable to design the second layer as a piezoresistive material, which has the properties to provide a local high conductivity as a response to a local deformation. Preferably each member of the electrode group is electrically connected to a multiplexer unit of the detection unit. Preferably, by the multiplexer unit, at least one first subset of the members of the electrode group may be connected to at least one current or voltage source. Preferably by the multiplexer unit, at least one second subset of the members of the electrode group may be electrically connected to a detection device.

According to a further preferred embodiment between the first layer and the second layer an adhesive is applied in preferably at sparse points. Preferably between the second layer and the third layer an adhesive is applied preferably at sparse points. The expression "at sparse points" should be understood that the area on which adhesive is applied is large enough to ensure a rigid connection between the layers and at the same time small enough to avoid introducing electrical isolation between the first layer and the second layer and the third layer and the second layer.

The objective is also addressed by an electronic skin for an autonomous system, in particular a robot comprising the tactile sensing system according to at least one of the above-mentioned embodiments. The electronic skin may comprise the features or combinations of the features described above for the tactile sensor device. Further, the same advantages may apply for the electronic skin as described above for the tactile sensing system and vice versa.

The objective is also addressed by an autonomous system, in particular a robot comprising the tactile sensing system according to at least one of the above-mentioned embodiments. The autonomous system may comprise the features or combinations of the features described above for the tactile sensing system and/or the electronic skin. Further, the same advantages may apply for the autonomous system as described above for the tactile sensor device, the electronic skin and vice versa

Preferably the sensor component is used as an electronic skin of the autonomous system. The electronic skin may comprise the tactile sensing system alone, the sensor component alone, or the tactile sensing system and the sensor component together. Such an electronic skin can be designed at a large scale. Preferably the electronic skin is flexible and/or soft, such that it may be easily wrapped around the autonomous system or robot.

Preferably the autonomous system comprises a component with an outer skin, wherein the outer skin comprises the sensor component and/or the tactile sensor device. Preferably the outer skin is wrapped around the component. Such a component may for instance be an arm. It is also conceivable that the sensor component is wrapped around the entire autonomous system, in particular the robot.

The objective is also addressed by a method to operate a tactile sensing system according to at least one of the above-mentioned embodiments and to simultaneously detect at least one contact force along the normal axis Z and at least one lateral strain, comprising the following steps:

a) providing a first mapping function for detecting the at least one contact force along the normal axis Z and providing a second mapping function for detecting the at least one lateral strain;
b) connecting the third layer and a first subset of electrodes of the first layer with a current or voltage source, such that in case the at least one contact force along the normal axis Z acts on the sensor component a current flows between the first subset of electrodes and the third layer and measuring the voltage of a second subset of electrodes;
c) measuring a voltage between a second subset of electrodes and the third layer and/or between the electrodes of the second subset of electrodes;
d) connecting a third subset of electrodes of the first layer with a current or voltage source such that a current flows between predetermined electrodes of the third subset of electrodes;
e) measuring the voltage between the electrodes of the fourth subset of electrodes;
f) applying the first mapping function and the second mapping function on the measured voltages and obtaining the force distribution resulting from the at least one contact force acting along the normal axis Z and the at least one lateral strain.

Preferably the current in step b) is a constant current. Preferably the current in steps d) is a constant current. According to a further embodiment of the invention, the current in step b) is not constant current. According to a further embodiment of the invention, the current in step d) is not a constant current.

Preferably in step e) a voltage change is measured depending on the change of the resistance in the first layer caused by at least one lateral strain.

Preferably before step f) the following step is performed:
repeating the steps b) to e) for a preset number of iterations. Advantageously wherein for each iteration a different first subset of electrodes, second subset of electrodes, third subset of electrodes and fourth subset of electrodes is chosen. Preferably different current injection patterns between the electrodes of the third subset of electrodes and/or between the third layer and the first subset of electrodes are implemented.

Preferably an output of the force distribution is generated in form of a matrix of values. This matrix of values may be visualized in a two-dimensional plot, for instance as a false color image. The output may be displayed on a computing device which is connected to the detection unit or which is part of the detection unit.

According to the method a resistance reconstruction is preferably used. When a physical contact is applied to the sensor component, the resistance distribution over the component changes. This resistance distribution change is estimated by the electrodes distributed over the component. The resistance reconstruction method estimates resistance distributions caused by either contact force along the normal axis Z or a lateral strain. The method preferably calculates the resistance distribution of a continuum medium when injected currents through the subsets of electrodes and corresponding measured voltages are known. This is an inverse problem, so finding a proper mapping function is important. Thus, the method comprises providing one first mapping function for contact sensing and another second mapping function for lateral strain sensing. Preferably the first mapping function is a linear mapping function. Preferably the second mapping function is linear mapping function. It is also conceivable that the first mapping function and/or the second mapping function are nonlinear mapping functions using either a physics model-based approach or a data-driven approach.

Preferably the conductivity distribution $\sigma$ may be estimated from the voltage potentials measured from the electrodes. A linearized approximation is advantageously used to obtain the Jacobian matrix that maps conductivity changes to the voltage measurement changes from the electrodes.

$$\delta E \approx J\delta\sigma + w$$

**E** is a vector of voltages measured from the electrodes. **J** is the Jacobian matrix calculated from the resistance matrix, and **w** is a noise vector.

According to Maxwell's equation the following relationship between the electric potential $\phi$ and the conductivity distribution $\sigma$ in the region $\Omega$ by assuming direct current and the absence of interior current sources is:

$$\nabla \cdot (\sigma\nabla\phi) = 0 \text{ in } \Omega$$

If the conductivity is known, the potential can be estimated from knowledge of the boundary condition on $\partial\Omega$.

$$j = \sigma\nabla\phi \cdot n \text{ in } \delta\Omega$$

where j is the current density and n denotes the outward unit normal vector to $\partial\Omega$.

To solve this equation, preferably the finite element method (FEM) is applied to derive the following set of linear equations:

$$V = R(\sigma) \cdot I$$

where **V** and I are the potential across and current through the finite element, respectively. R(a) is the resistance matrix, which is a function of the conductivity distribution.

When electrical current is injected via a subset of electrodes, the voltage measurement change from another subset of electrodes is preferably determined as follows.

$$\Delta E_{ik} = M_i^T \big( R(\sigma + \Delta\sigma) - R(\sigma) \big) P_k$$

where $M_i$ is the i-th voltage measurement pattern and $P_k$ is the k-th current injection pattern. More details of this mathematical background are provided by D. S. Holder, Electrical impedance tomography: methods, history and applications. CRC Press, 2004.

According to a further preferred embodiment the first preferably linear mapping function is generated by a simulation method comprising the following steps using a current flow perturbation:

a) Define the geometry and resistivity of the sensor component, wherein the area of the third layer is divided into a preset number of perturbation locations x;
b) Define the geometry of the plurality of electrodes in the first layer;
c) Create a top electrode at a predefined perturbing location x on the third layer;
d) Discretize the geometry of the sensor component and the plurality of electrodes into mesh elements;
e) Define current injection including the top electrode;
f) Run simulation;

g) Save simulated voltage values;
h) Repeat steps c) to g) for all predetermined locations x of the third layer;
i) Generate the first preferably linear mapping function for detecting the at least one contact force along the normal axis Z.

Preferably the simulation imposes the amount of current flows either from a current source or a voltage source. Preferably these steps are done only in the first calibration step of the tactile sensing system. The first mapping function may be stored in a storage unit of the detection unit. Preferably when the third layer is pressed on a contact location $x_i$, the electrical currents flow forming electrical potentials. If resistances of the model and injected current are known, the corresponding voltages at the distributed electrodes can be estimated. Thus, all the predefined contact locations x are advantageously simulated to estimate the corresponding voltages.

$$dV_{current\_perturbation} = \left.\frac{\partial R(x)}{\partial x}\right|_{I=const.} \cdot dx$$

Preferably these voltages form a Jacobian matrix ($J_{current-perturbation}$) that relates contact location x to voltage measurements.

$$J_{current\_perturbation} = \left.\frac{\partial R(x)}{\partial x}\right|_{I=const.}$$

Preferably the first mapping function, which is generated in step i) is the inverse of this Jacobian matrix ($J_{current\_perturbation}$).

According to a further preferred embodiment the second preferably linear mapping function is generated by a simulation method comprising the following steps

a) Define the geometry and resistivity of the sensor component, wherein the area of the first layer is divided into a preset number the perturbation locations r;
b) Define the geometry of the plurality of electrodes in the first layer;
c) Discretize the geometry of the sensor component and the plurality of electrodes into mesh elements;
d) Define current injection only from the plurality of electrodes in the first layer;
e) Change the resistances of the mesh elements on a perturbating location r in the first layer;
f) Run simulation;
g) Save simulated voltage values;
h) Repeat steps e) to g) for all predetermined locations r of the first layer;
i) Generate the second preferably linear mapping function for detecting the at least one lateral strain.

Preferably these steps are also done only in the first calibration step of the tactile sensing system. The second mapping function may be stored in a storage unit of the detection unit. The detection of a lateral strain comprises a current injection between electrodes of the first layer. When the resistance is changed due to the lateral strain, the voltages measured from the distributed electrodes of the first layer vary. The corresponding voltages may be estimated by a resistance perturbation on predefined locations of the first layer.

The resistances at the predefined locations (r) can be perturbed to estimate the corresponding voltages. Thus, all the predefined contact locations r are advantageously simulated to estimate the corresponding voltages. These voltages form a Jacobian matrix ($J_{resistance\_perturbation}$) that relates resistance distribution change to voltage measurements.

$$dV_{resistance\_perturbation} = \left.\frac{\partial R(r)}{\partial r}\right|_{I=const.} \cdot dr$$

$$J_{resistance\_perturbation} = \left.\frac{\partial R(x)}{\partial x}\right|_{I=const.}$$

Preferably the first mapping function, which is generated in step i) is the inverse of this Jacobian matrix

($J_{resistance\_perturbation}$).

Further advantages, aims and properties of the present invention will be described by way of the appended drawings and the following description.

In the drawings:

Fig. 1a        is a principal explosion view of a sensor component according to one embodiment;
Fig. 1b        is a sectional view of a sensor component according to a further embodiment;
Fig. 2        shows a sensor component and an equivalent circuit diagram representing the resistances of the sensor component according to one embodiment;
Fig. 3        shows the tactile sensing system according to one embodiment;
Fig. 4        shows a sensor component according to one embodiment;
Fig. 5a, b        show a sectional view of a sensor component in case of contact according to one embodiment;
Fig. 6a, b, c        show a sectional view of a sensor component in cases of lateral strain according to one embodiment;
Fig. 7a, b        show schematic diagrams of a resistance network model;
Fig. 8a, b        show schematic diagrams of a detection of a contact force;
Fig. 9        shows a schematic diagram of a detection of a lateral strain detection
Fig10a, b        show schematic diagrams of the electrode distribution in the first layer;
Fig. 11        shows simulation results for different electrode distributions in the first layer;
Fig. 12        shows simulation results for different electrode distributions in the first layer;
Fig. 13a        shows a flowchart for a current source perturbation method;
Fig. 13b        shows a flowchart for a resistance perturbation method;
Fig 14        shows a principal measurement of the contact force and the lateral strain
Fig. 15a, c        depict a microscopic picture from the fabric in a non-stretched and a stretched state;
Fig. 15b, d        show a principle of strain-sensitive textiles
Fig. 16a, b, c        show the second layer as solid conductive foam and a microscopic image;
Fig. 17        resistance measurement on a sample of conductive foam with and without pressure.
Fig. 18        shows a component of an autonomous system with a tactile sensor device.

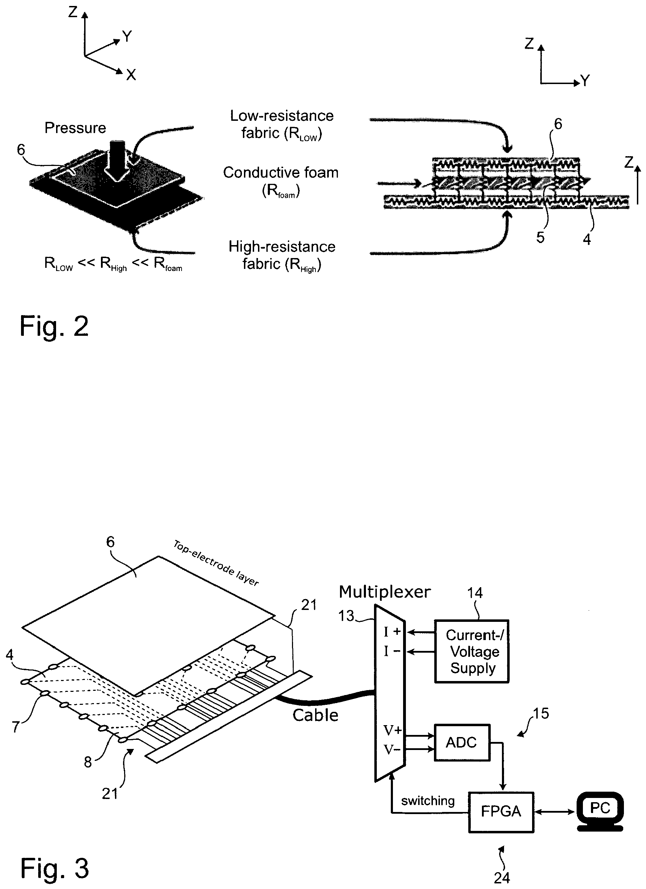

Figure 3 shows a tactile sensing system 1 having a sensor component 2 which comprises a plurality of layers 4, 5, 6 stacked along a normal axis Z and a detection unit 3 electrically connected to the sensor component 2, wherein the sensor component 2 comprises a first layer 4, designed as a piezoresistive layer, a third layer 6, designed as a conductive layer which is electrically connected to the detection unit 2, and a second layer 5, designed as a spacing layer between the first layer 4 and the third layer 6, wherein the first layer 4 comprises a plurality of electrodes electrically 7 connected to the detection unit 3, wherein at least one contact force 10 along the normal axis Z on the sensor component 2 is detectable by the detection unit 3 due to a change of a current distribution between the first layer 4 and the third layer 6, wherein at least one lateral strain 11 on the sensor component 2 is detectable by the detection unit 3 due to a change of the resistance distribution change in the piezoresistive first layer 4.

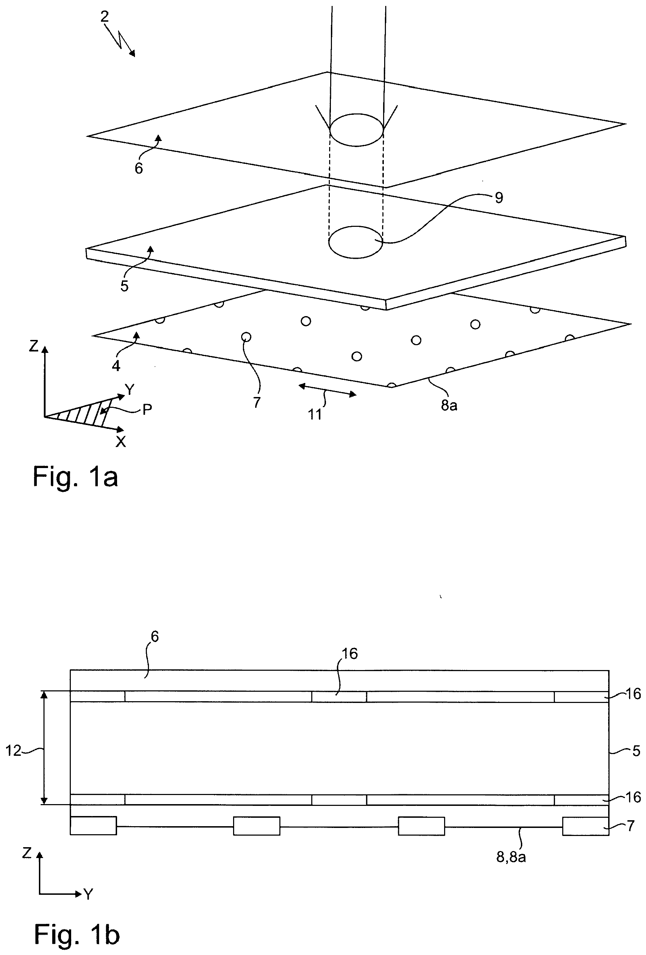

In figures 1a, 1b and 2 embodiments of the sensor component 2 are displayed.

The sensor component 2 is a stack of layers comprising at least the first layer 4, the second layer 5 and the third layer 6. It is conceivable that the sensor component 2 comprises more layers made of certain materials which are arranged below and/or above and/or in between the first layer 4, the second layer 5 and the third layer 6. The sensor component 2 is therefore a laminate design composed of at least preferably exactly three layers. The layers are stacked along the normal axis Z. The layers extend parallel to a first plane P comprising a length axis X and width axis Y. The second layer 5 is arranged along the normal axis Z above the first layer 4 and along the normal axis Z below the third layer and is therefore also called the spacer layer.

The thickness of the sensor component 2 is in the range between a few micrometers to a few centimeters. Thus, the thickness of the layers 4, 5, 6 of the sensor component 2 is in a range between a few micrometers to a few centimeters. The layers 4, 5, 6 of the sensor component 2 consist of flexible and/or soft materials. Therefore, the entire sensor component 2 may be soft and/or flexible and therefore may be wrapped easily around a component of an autonomous system like a robot or even wrapped around the entire autonomous system like a robot.

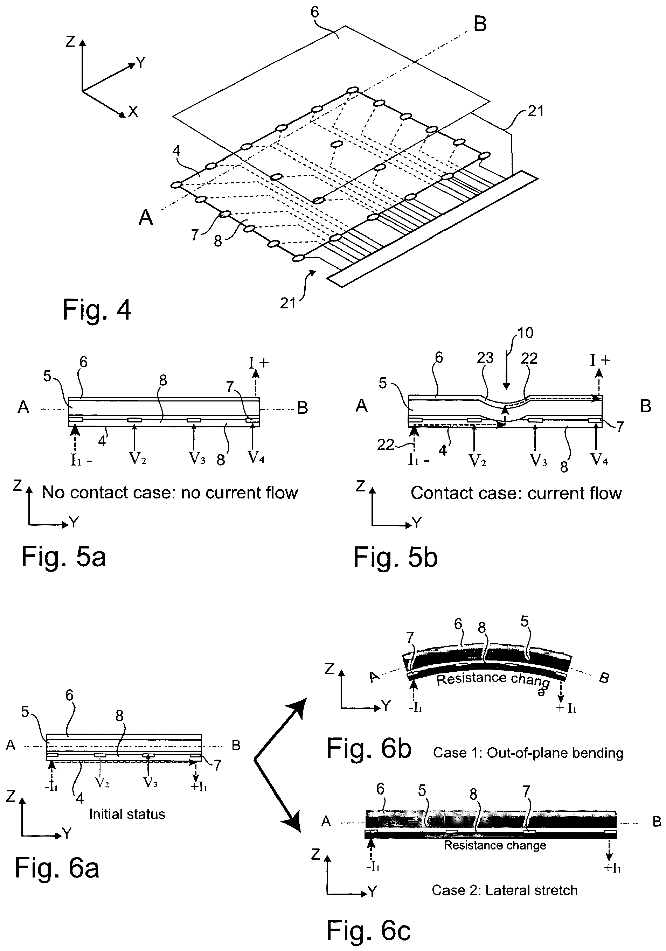

The tactile sensing system may detect at least one contact force 10 along the normal axis Z and at least one lateral strain 11. Typically, the at least one contact force 10 acts on the surface of the third layer 6. Due to the flexibility and/or softness of the third layer the at least one contact force 10 acts on the surface of the second layer 5. Naturally, the at least one contact force 10 would also act on the surfaces of the third 6 and second layer 5 if there would be more layers provided on top of the third layer 6. The direction of the at least one contact force 10 may be parallel to the normal axis Z. It is also conceivable that the at least one contact force 10 has only a direction component parallel to the normal axis Z. The at least one lateral strain 11 may be introduced by a lateral stretch-force of the sensor component. This means that the distance between two points on a layer is increased due to the strain. This is depicted in figure 6b.

Obviously, the at least one lateral strain 11 may also cause a compression in which the distance between two points is decreased. Alternatively, or cumulatively the at least one lateral strain 11 may be introduced by a bending force, by which the sensor component 2, the stack of layers, the first layer 4 is/are bent out of the first plane P. This is depicted in figure 6c.

The first layer 4 comprises a sublayer 4a which has piezoresistive properties. The piezoresistive layer 4 is sensitive to lateral strain. The sublayer 8 comprises a conductive fabric and/or a conductive ink and/or carbon and/or carbon nanotubes and/or graphene and/or intrinsically conducting polymers (PEDOT, PSS, Polypyrrole, etc). The sublayer 8 may also be a combination of at least two of said materials. Further, the plurality of electrodes 7 of the first layer 4 is electrically connected to said sublayer 8.

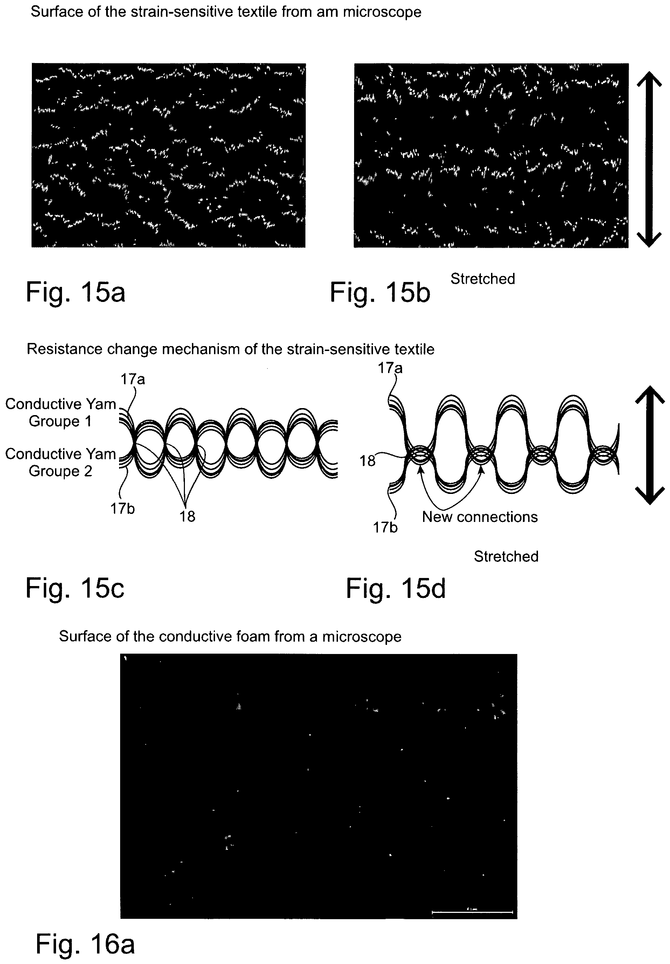

The sublayer 8 consists of a high-resistance fabric or high resistance textile, wherein the high resistance fabric layer is woven or knitted by at least one conductive yarn and comprises a predetermined textile structure. A change of the textile structure caused by the at least one lateral strain causes a change in the resistance of the sublayer 8. This is depicted in figures 15a to 15d. Figure 15b shows in principle a section of the textile structure comprising a first group of conductive yarn 17a and a second group of conductive yarn 17b. The two groups of conductive yarn 17a, 17b may consist of the same material or of a different material. The two conductive yarns 17a, 17b are interwoven or knitted with each other. This results in certain contact points 18 between the two groups of conductive yarns 17a, 17b through which a current might flow from one conductive yarn 17a, 17b to another resulting in a certain resistance due to the nature of the contact points. The high-resistance fabric is preferably woven or knitted such that the two groups of conductive yarn 17a, 17b alternate along the weaving or knitting direction, resulting in a plurality of contact points along the weaving or knitting direction. The at least one lateral strain 11 causes a stretch between the two groups of conductive yarn 17a, 17b. By this stretch the two groups of conductive yarn 17a, 17b have different contact points with each other as depicted in figure 15d. Such new connections result in a change namely a decrease of the resistance of the fabric. It is also conceivable to use other kinds of fabric with a different structure can behave differently. If the resistance change is not extreme, the same sensing mechanism may detect either resistance increase or decrease.

Hence, a change of the textile structure caused by the lateral strain 11 causes a change in the resistance of the sublayer 8. Figures 15a and 15c depict a microscopic picture from the fabric in a non-stretched and a stretched state.

The second layer 5 is deformable along the normal axis Z. The at least one contact force 10 along the normal axis Z acts on at least one contact area 9 of the second layer 5, through at least the third layer 6. The second layer 5 is deformed essentially within the at least one contact area 9, depicted in principle in figure 1a. The second layer may also be deformed gradually outside of the at least one contact area 9. The degree of deformation outside the at least one contact area depends on the material of the second layer 5. Due to said at least one deformation at least one distance 12 along the normal axis Z between the first layer 4 and the third layer 6 is decreased at least within the contact area 9. Said at least one deformation and/or the decrease of the at least one distance along the normal axis Z between the first layer 4 and the third layer 6 result in an increase of the conductivity between the first layer 4 and the third layer 6. Preferably, the increase of the conductivity is essentially restricted to the extent of the at least one contact area 9 along a length axis X and a width axis Y. The conductivity of the second layer 5 should be low when there is no compressive pressure. If there is a compressive pressure, electrical conductivity of this layer 5 increases, connecting the first layer 4 and the third layer. Hence, the second layer 5 has piezoresistive characteristics with regard to the at least one contact force along the normal axis Z. This piezoresistive characteristic can be achieved by using piezoresistive materials (nanocomposites, tunneling material) and/or porous structures (e.g. a mesh structure, a thin sponge). Advantageously, said current flows within the deformed contact area 9 of the second layer 5. Alternatively, or cumulatively a tunneling current is established between the first layer 4 and the third layer 6 essentially within the contact area 9.

According to a further preferred embodiment the second layer comprises a porous structure in particular a conductive foam and/or a piezoresistive material and/or a nanocomposite and/or a tunneling material.

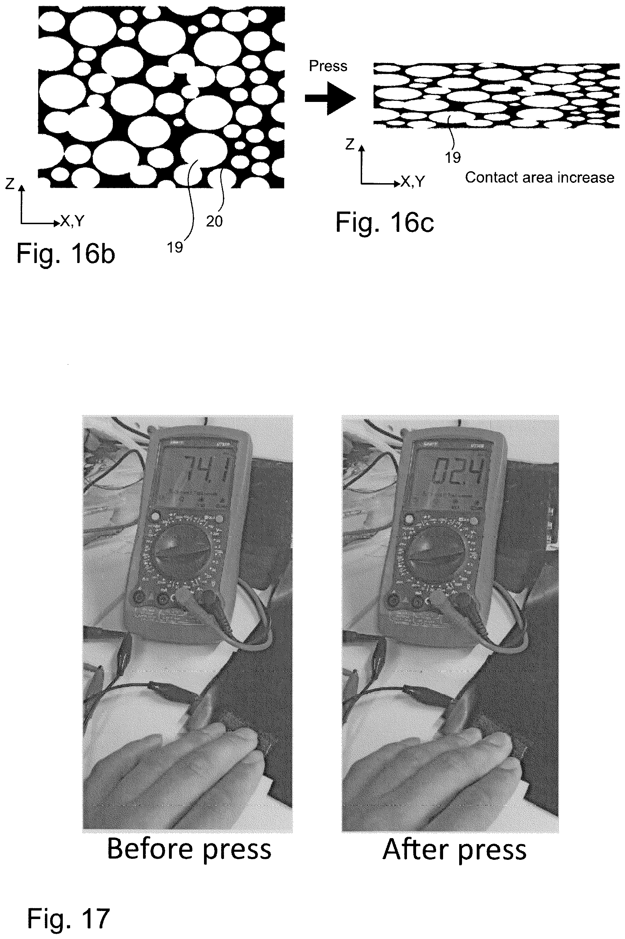

According to one preferred embodiment the second layer is a solid conductive foam, as depicted in figures 16a, 16b, 16c. Such a conductive foam is an object formed by electrically insulating trapping pockets 19, as depicted in figures 16b and 16c. The trapping pockets 19 are formed in a conductive material 20. In a non-compressed state, the conductive foam has a preferably high resistance. In a compressed state as seen in Fig 16c the trapping pockets 19 are deformed, which results in an increase of the internal contact areas of the conductive material. When the conductive foam is pressed, the porous structure becomes a bulk conductive material. This results in a decrease of the resistance along the normal axis Z and an increase of the conductivity in the compressed area along the normal axis Z. Figure 16a depicts a microscopic image of the surface of the conductive foam.

In Figure 17 a measurement is depicted of a conductive foam with and without pressure. Resistance of the square laminate sample (30 mm x 30 mm x 5 mm) is initially 74.1 MOhm. The resistance drops to 2.4 MOhm when it is completely pressed. This value (2.4 MOhm) is therefore still larger than the resistance of the strain-sensitive first layer 4.

The third layer 6 is made of conductive fabric or a conductive textile. The conductivity of the third layer 6 is higher than the conductivity of the first layer 4 or the conductivity of the sublayer 8 of the first layer 4. The third layer may also be called the electrode layer. The conductivity of said sublayer 8 is lower than the conductivity of the plurality of electrodes 7. Preferably the conductivity of the second layer 5 is lower than the conductivity of the first layer 4, in case when the second layer 5 is not deformed. Preferably the conductivity of the second layer 5 is lower than the conductivity of the third layer 6. This is for instance depicted in figure 2, where the third layer 6 is a low-resistance fabric with a resistance $R_{LOW}$, the second layer 5 is a conductive foam with a resistance $R_{foam}$ and the first layer is a high resistance fabric $R_{High}$. The relation of the resistances is:

$$R_{LOW} \ll R_{High} \ll R_{foam}$$

In the sketch on the right of figure 2 the layers are depicted with substituted resistors. A current path, depending on the incident force, is then a series circuit of a subset of such substitute resistors.

Preferably the second layer 5 does not allow a current within the second layer 5 parallel to the first layer 4 between a first subset of electrodes 7 from the first layer 4 and a second subset of electrodes 7 of the first layer 4. The in-plane current of the first layer 4 is therefore essentially restricted to the sublayer 8 of the first layer 4. In other words the second layer does not allow an essential current circumventing the first layer 4.

Preferably between the first layer 4 and the second layer 5 an adhesive 16 is applied, preferably preferably at sparse points. Preferably between the second layer 5 and the third layer 6 an adhesive 16 is applied preferably at sparse points. The expression "at sparse points" should be understood that the areas of the individual layers on which adhesive is applied is large enough to ensure a rigid connection between the layers and at the same time small enough to avoid introducing electrical isolation between the first layer and the second layer and the third layer and the second layer. It is conceivable that there is a plurality of sparse points with adhesive between the individual layers. The adhesive locations should be small enough to not interfere with the functionality of the sensor component 2 but large enough to ensure a tight enough connection between the individual layers.

In Figure 1b an embodiment of a sensor component 2 is depicted. The second layer 5 needs to have high resistance compared to the first piezoresistive layer 4. When the laminate is pressed, the resistance of the second layer 5 should decrease. As already stated, a candidate for a second layer is conductive foam.

Other candidates for the second layer are pressure-sensitive composites:

- Quantum tunneling composites: Quantum tunneling is realized by imposing conductive nanoparticles and carefully controlling the processes used to blend them with other particles. The composite's electrical resistance changes with applied force. The resistance level can be controlled by the number of conductive particles used.
- Anisotropic piezoresistive composite: Anisotropic conductivity can be made by applying voltages on conductive composites. One example is mixing carbon particle with mag-netostrictive powders such as Terbium. (Zoflex® Conductive Rubber Sheets (Pressure Sensitive))

The strain-sensitive first layer 4 could for instance be a conductive fabric (Eeontex, Eenonyx, USA) that has 10^4 Ohm/Sq resistivity. The second layer could be a conductive foam (ESD foam, Wolfgang Warmbier, Germany) that has 10^10 - 10^12 Ohm/Sq resistivity. The top-electrode third layer 6 could be another conductive fabric (Technik-tex P130, Statex, Germany) that has 0.1 Ohm/Sq resistivity.

The plurality of electrodes 7 of the first layer 4 and the third layer 6 forms an electrode group. Each member of the electrode group is electrically connected to a multiplexer unit 13 of the detection unit 3. By the multiplexer unit 13, at least one first subset of the members of the electrode group may be connected to at least one current or voltage source 14. Further, by the multiplexer unit 13, at least one second subset of the members of the electrode group may be electrically connected to a detection device 15. This is depicted in Fig 3.

The tactile sensing system 1 is operated with a method to simultaneously detect a contact force 10 along the normal axis Z and a lateral strain 11. Preferably the detection unit 3 applies a resistance reconstruction method, which allows a simultaneous detection of the contact force 10 along the normal axis Z on the sensor component 2 and the lateral strain 11 on the sensor component 2.

The method to operate a tactile sensing system 1 and to simultaneously detect at least one contact force 10 along the normal axis Z and at least one lateral strain 11, comprising the following steps

a) providing a first mapping function for detecting the at least one contact force 10 along the normal axis Z and providing a second mapping function for detecting the at least one lateral strain 11;
b) connecting the third layer 6 a first subset of electrodes 7 of the first layer 4 with a current or voltage source 14, such that in case a contact force 10 along the normal axis Z acts on the sensor component 2 a current flows between the first subset of electrodes 7 and the third layer 6, and measuring the voltage of a second subset of electrodes 7;
c) measuring a voltage between a second subset of electrodes 7 and the third layer 6 and/or between the electrodes of the second subset of electrodes 7;

d) connecting a third subset of electrodes 7 of the first layer 4 with a current or voltage source 14 such that a current flows between predetermined electrodes 7 of the third subset of electrodes 7;

e) measuring the voltage between the electrodes of the fourth subset of electrodes 7;

f) applying the first mapping function and the second mapping function on the measured voltages and obtaining the force distribution resulting from the at least one contact force 10 acting along the normal axis Z and the at least one lateral strain 11.

Preferably before step f) the following step is performed:

repeating the steps b) to e) for a preset number of iterations, wherein for each iteration a different first subset of electrodes, second subset of electrodes, third subset of electrodes and fourth subset of electrodes is chosen. Preferably the current in step b) is a constant current. According to a further embodiment of the invention, the current in step b) is not constant current. Preferably the current in steps d) is a constant current. According to a further embodiment of the invention, the current in step d) is not a constant current.

In order to establish the connections in steps b) and d) the multiplexer unit 13 is used. The measurement in step c) and e) is performed by the detection device 15. The detection device is also connected by the multiplexer unit with the according electrodes and/or third layer.

Sensing of both surface normal contact and lateral strain is performed using resistance reconstruction. The resistance change of the conductive medium is estimated by injecting electrical currents and measuring voltages.

Figure 4 shows an installation of the plurality of electrodes 7 and the third layer 4 which enables surface normal contact sensing. The configuration of the plurality of electrodes 7 in the first layer 4 with distributed electrodes 7 on the sublayer 8. The third layer 6 is designed as a wide electrode layer. All the electrodes, including the distributed electrodes 7 of the first layer 4 the electrode layer in form of the third layer 6, are connected to the electronic circuits 21 for current injection and voltage measurement. In this figure the second layer is omitted for the sake of clarity.

Figures 5a and 5b illustrate the working principle for detecting the at least one contact force 10 along the normal axis Z. Figures 5a and 5b are a sectional view along the line A-B in figure 4. The current source 14 (+I, -I) is connected to a first subset (one or more than one electrodes) of the electrodes 7 of the first layer 4 and to the electrode layer in the form of the third layer 6. The current source 14 may also be replaced by a voltage source with a current monitoring resistor. If there is no contact force on the sensor component 2, an electrical current does not flow because the second layer 5 electrically separates the first layer 4 and the third layer 6. When there is a contact, the second layer 5 electrically connects the first layer 4 and the third layer 6, since there is a local deformation 23 of the second layer 5. This connection makes the electrical current flow. The electrical current is depicted with the dotted line 22. Due to the electrical current electrical potentials ($V_2$, V3, ...Vi) around the conductive medium are formed. The electrical potentials are measured by connecting the second subset of electrodes 7 and the third layer to the detection device. The electrical potentials are also measured by connecting the second subset of electrodes 7 and the third subset of electrodes 7.

Figures 6a, 6b and 6c illustrate the working principle for detecting the lateral strain 11. Figures 6a, 6b and 6c are a sectional view along the line A-B in figure 4. In this case, the current or voltage source 14 (+I, -I) is connected to the third subset electrodes of the piezoresistive first layer 4. In this case, the electrical potentials ($V_2$, $V_3$,... $V_i$) measured from the fourth subset of electrodes 7 of the piezoresistive first layer 4 are mainly sensitive to the resistance change caused by lateral strains such as out-of-plane bending as depicted in figure 6b or lateral stretch as depicted in figure 6c.

In Figure 3 the first layer 4 and the third layer 6 are depicted, wherein the electronic circuits 21 connect the plurality of electrodes 7 and the third layer 6 with the multiplexer unit 13 of the detection unit 3. The multiplexer unit 13 may connect a subset of electrodes and/or the third layer with a current or voltage source 14 or more than one and/or a detection device which may comprise an analog digital converter ADC. The multiplexer unit 13 can be controlled by any means of controllers 24, such as microcontrollers, FPGAs (field programmable gate arrays), digital communications, etc.

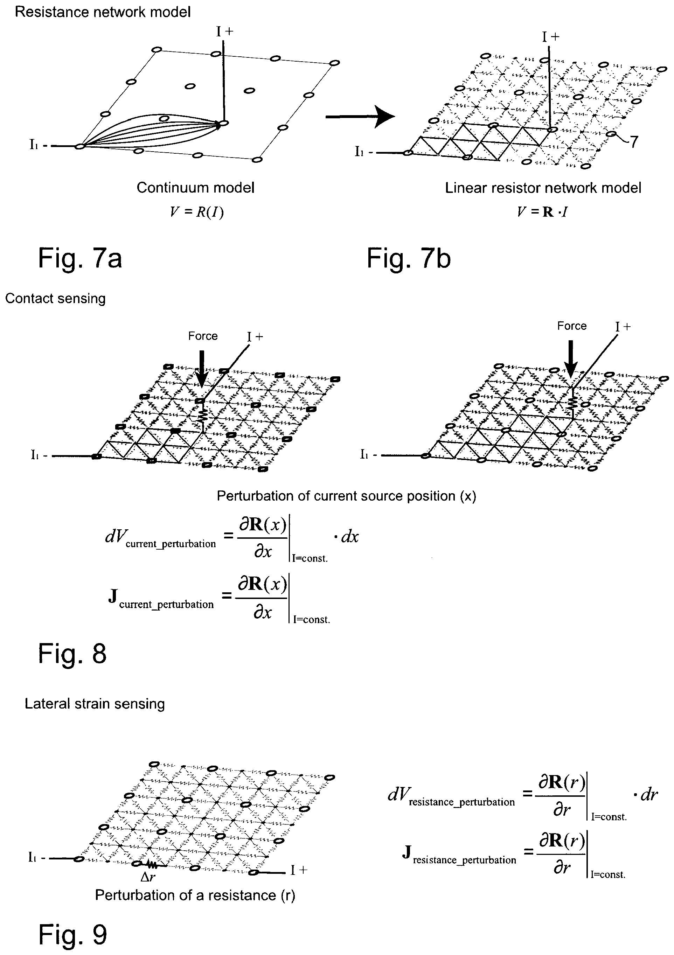

The first and second mapping functions are preferably based on a resistance reconstruction method to estimate resistance distributions caused by either surface normal contact or lateral strain. The resistance reconstruction method calculates resistance distribution of a continuum medium when injected currents and corresponding voltages are known. Both mapping functions are computed by perturbing the forward operator that is modeled with an approximate resistance network model. Details of this resistance network model are shown in Figures 7a, 7b, 8 and 9. Figure 7a shows the real electrical potential distribution formed by current injection and a linear resistor network model. In the continuum model according to figure 7a the relation

$$V = R(I)$$

is valid. In the linear resistor network model according to figure 7b the relation

$$V = R(I)$$

is valid.

Figure 8 illustrates a linear mapping model for detecting the at least one contact force 10. When the top layer electrode in form of the third layer 6 is pressed on a contact location $x_i$, the electrical currents flow forming electrical potentials. If the resistances of the model and the injected current are known, the corresponding voltages at the distributed electrodes 7 can be estimated. In the same way, all the predefined contact locations x are simulated to estimate the corresponding voltages. These voltages form a Jacobian matrix $J_{current\_perturbation}$ that relates contact location x to voltage measurements. The first mapping function is then the inverse a Jacobian matrix $J_{current\_perturbation}^{-1}$.

Figure 9 a linear mapping model for detecting the at least one lateral strain 11. In this case, currents are injected in between the distributed electrodes of a third subset of electrodes 7. When the resistance of the model is changed, the voltages measured from the distributed electrodes of the fourth subset of electrodes also vary. The resistances at the predefined locations r can be perturbed to estimate the corresponding voltages. These voltages form a Jacobian matrix $J_{resistance\_perturbation}^{-1}$ that relates resistance distribution change to voltage measurements. When Jacobian matrices are obtained from simulation, inverse matrices of the Jacobian matrix are computed to obtain the mapping functions. In this procedure, many inverse computation methods can be applied such as regularization.

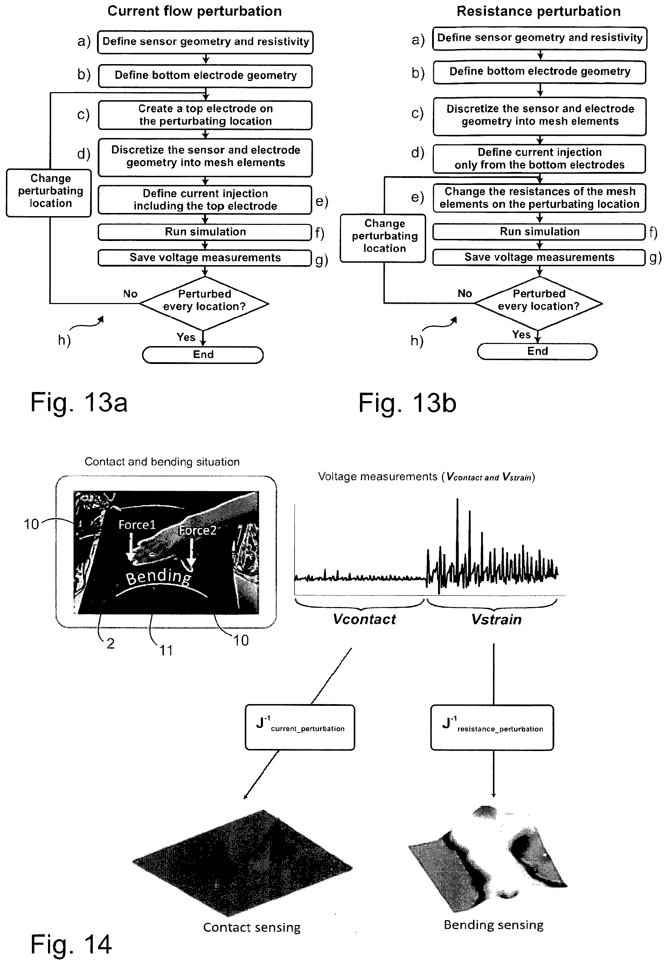

In figure 13a a flowchart with regard to the first preferably linear mapping function is depicted. The first linear mapping function is generated by a simulation method comprising the following steps using a current flow perturbation:

a) Define the geometry and resistivity of the sensor component 2, wherein the area of the third layer 6 is divided into a preset number the perturbation locations x;
b) Define the geometry of the plurality of electrodes 7 in the first layer 4;
c) Create a top electrode on a predefined perturbing location x on the third layer 6;
d) Discretize the geometry of the sensor component 2 and the plurality of electrodes 7 into mesh elements;
e) Define current injection including the top electrode;
f) Run simulation;
g) Save simulated voltage values;
h) Repeat steps c) to g) for all predetermined locations x of the third layer 6;
i) Generate the first preferably linear mapping function for detecting the at least one contact force 10 along the normal axis Z.

In figure 13b a flowchart with regard to the second preferably linear mapping function is depicted. The second preferably linear mapping function is generated by a simulation method comprising the following steps

a) Define the geometry and resistivity of the sensor component, wherein the area of the first layer 4 is divided into a preset number the perturbation locations r;
b) Define the geometry of the plurality of electrodes 7 in the first layer 4;
c) Discretize the geometry of the sensor component 2 and the plurality of electrodes 7 into mesh elements;
d) Define current injection only from the plurality of electrodes 7 in the first layer 4;
e) Change the resistances of the mesh elements on a perturbing location r in the first layer;
f) Run simulation;
g) Save simulated voltage values;
h) Repeat steps e) to g) for all predetermined locations r of the first layer 4;
i) Generate the second preferably linear mapping function for detecting the at least one lateral strain 11.

Both mapping functions are computed by perturbing the forward operator that is modeled with an approximate resistance network model. The simulation is fundamentally based on the modified nodal analysis. According to the above stated methods to perturb the parameters related to the contact sensing and lateral strain sensing are perturbed, so that the mapping function can be obtained. Depending on the perturbing parameter, two different mapping functions are obtained. The simulation begins with defining the sensor geometry and base resistivity value. It can be defined in two or three dimensions. The geometry of plurality of electrodes 7 is also defined. The resistivity of the electrode is set as well.

In case of the current-flow perturbation, electrical current can flow from the bottom electrodes in the first layer 4 to the top-electrode in form of the third layer 6, wherever the contact force is applied. To simulate this situation, a point electrode at one specified location x is created, assuming the electrical current flows from the bottom electrodes of the first layer 4 to that location. For computation, the continuum model is discretized into mesh elements, which is a linear resistor network model. After the discretization, the current injection pattern is defined to always include the top-electrode in form of the third layer 6 and one of the bottom electrodes 7 of the first layer 4. The voltage measurement pattern is defined both from the top-electrode and the bottom electrodes 7 and only from the bottom electrodes 7 of the first layer 4. When the current injection pattern and voltage measurement pattern are set, one can compute the voltages formed on the resistor network model (the resistance of all the mesh elements and inject current are known). These voltage measurements are saved as a result of the specified perturbation. This perturbing location is changed to the other predefined location, and the process is repeated until all the predefined perturbing locations are simulated.

In case of the resistance perturbation, the sensor and electrode geometry is defined and discretized without including the top-electrode because this simulation model assumes that the electrical current doesn't flow from the bottom electrodes of the first layer 4 to the top-electrode in the form of the third layer 6. In reality, a small portion of the electrical current can flow, but this amount can be neglectable if the resistance of the spacing layer in the form of the second layer 5 is higher than that of the bottom strain-sensitive first layer 4. The current injection pattern and voltage measurement pattern are also selected only from the bottom electrodes 7 of the first layer. As a part of the perturbation, the resistances of the mesh elements corresponding to a specified location are changed. After that, the voltages are simulated and saved as a result of the specific perturbation. This perturbing location is changed to the other predefined location, and the process is repeated until all the predefined perturbing locations are simulated.

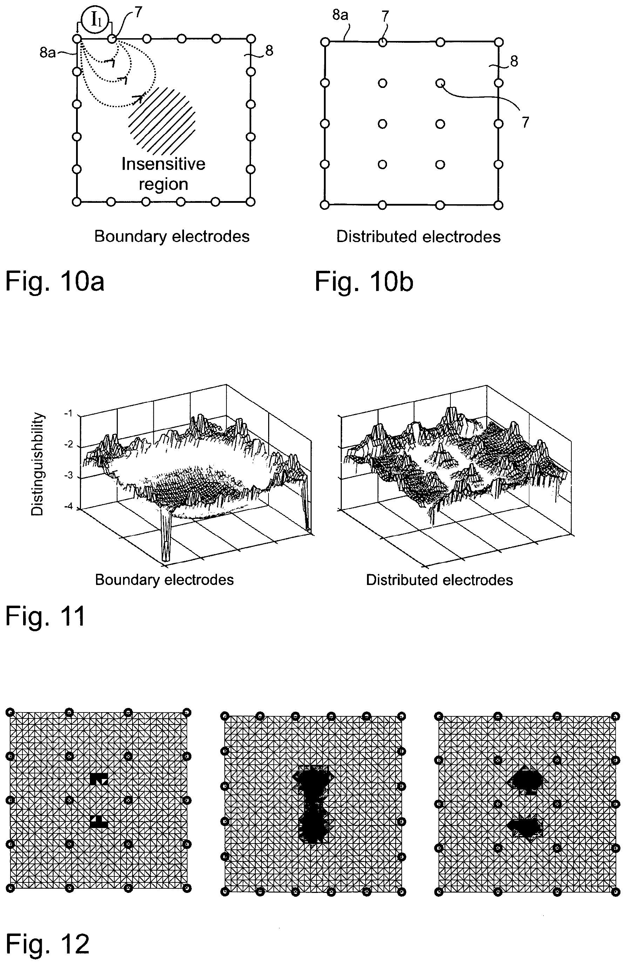

The plurality of electrodes 7 are arranged in the first layer 4. Rearranging the electrode configuration directly affects the inverse computation. One can imagine that any perturbation made far from an electrode cannot influence that electrode's voltage measurement. There are various possibilities on the distribution of the electrodes 7 on the surface of the sublayer 8. According to one embodiment the electrodes 7 are arranged only along the edges 8a of the sublayer 8. This is depicted in figure 10a. According to a further embodiment the plurality of electrodes 7 is arranged in a grid structure on the sublayer 8. As depicted in figure 10b. Various grid structures are hereby conceivable. The grid structure is in the form of a two-dimensional Bravais lattice.

The embodiment according to figure 10a shows a rather poor spatial resolution in the central sensing region because the central region is far from every one of the electrodes 7. Figure 11 shows the simulation results of the norm distinguishability in log scale for the boundary electrode model according to figure 10a and the distributed electrode model according to figure 10b. The distinguishability is defined by the amount of voltage change corresponding to the conductivity perturbation. The main difference occurs at the center region where the contact is far from the boundary 8a. Figure 12 shows the simulation results of two-point conductivity perturbation case. When the local conductivity at two points in the central region is perturbed, the inverse computation results in different outcomes that the boundary electrodes 7 model cannot distinguish the two different locations at the center. On the other hand, the distributed electrodes model adeptly discriminated the two local conductivity changes.

In Figure 14 gives an overview over the detection of two acting contact forces 10 and a lateral strain in form of a bending force. The contact forces and the lateral strain act simultaneously. Following to the predefined voltage measurement patterns, detection unit 3 controls the current injection condition and collects voltage measurements for both the contact-sensing case and the strain-sensing case, sequentially. As a result, the voltage measurements consist of two parts ($V_{contact}$, $V_{strain}$). These two voltage measurements are separately multiplied with the according mapping function. The voltage measurements relating to acting contact forces 10 are converted with the first mapping function in the form of an inverse Jacobian matrix $J_{current\_pertur\text{-}bation}^{-1}$. The voltage measurements relating to the acting lateral strain 11 are converted with the second mapping function in the form of an inverse Jacobian matrix $J_{resistance\_perturbation}^{-1}$. The corresponding outcomes are considered to be contact distribution and bending distribution.

The tactile sensing system 1 may be comprised of an autonomous system 100, in particular a robot. The sensor component 2 may be used as an electronic skin 103 of the autonomous system 100. The electronic skin may comprise the tactile sensing system 1 and/or the sensor component 2 or consist of the tactile sensing system 1 and/or the sensor component 2. Such an electronic skin can be designed at a large scale. Preferably the electronic skin 103 is flexible and/or soft, such that it may be easily wrapped around the autonomous system 100, in particular a robot.

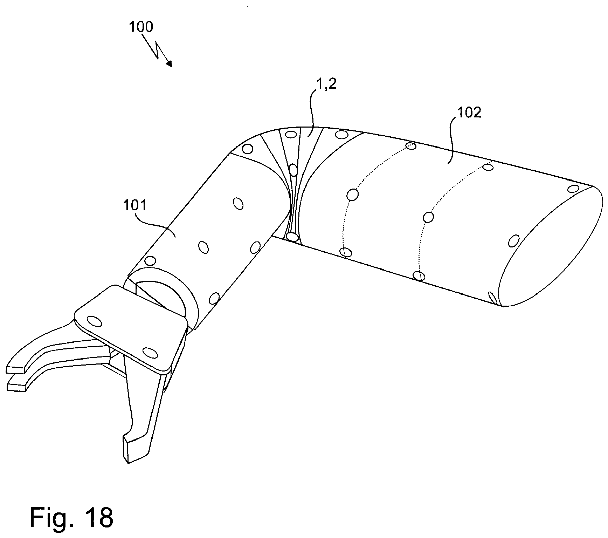

Figure 18 shows a component 101 of the autonomous system 100 with an outer skin 102, wherein the outer skin 102 comprises the sensor component 2. The component 101 is in this case an arm of a robot. It is also conceivable that the sensor component is wrapped around the entire autonomous system, in particular a robot.

Thus, this invention advantageously introduces a special piezoresistive laminate design, electrodes arrangement, current injection and voltage measurement strategy, and reconstruction process in order to estimate both surface normal contact sensing and lateral strain sensing simultaneously. Moreover, this invention advantageously demonstrates an example of a tactile sensor that can measure contact pressure and out-of-plane bending itself.

All the features disclosed in the application documents are claimed as being essential to the invention if, individually or in combination, they are novel over the prior art.

**List of reference numerals**

| | |
|---|---|
| 1 | tactile sensing system |
| 2 | sensor component |
| 3 | detection unit |
| 4 | first layer |
| 5 | second layer |
| 6 | third layer |
| 7 | plurality of electrodes |
| 8 | sublayer of first layer |
| 9 | contact area |
| 10 | contact force |
| 11 | lateral strain |
| 12 | distance |
| 13 | multiplexer unit |
| 14 | current or voltage source |
| 15 | detection device |
| 16 | adhesive |
| 17a | conductive yarn group 1 |
| 17b | conductive yarn group 2 |
| 18 | contact points |
| 19 | trapping pockets |
| 20 | conductive materials |
| 21 | electronic circuits |
| 22 | dotted line |
| 23 | deformation |
| 24 | controller |
| 100 | autonomous system |
| 101 | component |
| 103 | outer skin |
| X | length axis |
| Y | width axis |
| Z | normal axis Z |
| P | first plane |
| α | angle |

**Claims**

1. A tactile sensing system (1) having a sensor component (2) which comprises a plurality of layers (4, 5, 6) stacked along a normal axis Z and a detection unit (3) electrically connected to the sensor component (2),
**characterized in that**
the sensor component (2) comprises a first layer (4), designed as a piezoresistive layer, a third layer (6), designed as a conductive layer which is electrically connected to the detection unit (2), and a second layer (5), designed as a spacing layer between the first layer (4) and the third layer (6), wherein the first layer (4) comprises a plurality of electrodes electrically (7) connected to the detection unit (3), wherein at least one contact force (10) along the normal axis Z on the sensor component (2) is detectable by the detection unit (3) due to a change of a current distribution between the first layer (4) and the third layer (6), wherein at least one lateral strain (11) on the sensor component (2) is detectable by the detection unit (3) due to a change of the resistance distribution change in the piezoresistive first layer (4).

2. The tactile sensing system (1) according to claim 1, wherein
the first layer (4) comprises a sublayer (4a) which has piezoresistive properties, wherein the sublayer (8) comprises a conductive fabric and/or a conductive ink and/or carbon and/or carbon nanotubes and/or graphene and/or intrinsically conducting polymers, wherein the plurality of electrodes (7) of the first layer (4) is electrically connected to said sublayer (8).

3. The tactile sensing system (1) according to claim 2, wherein
the conductivity of said sublayer (8) is lower than the conductivity of the plurality of electrodes (7), wherein the sublayer (8) consists of a high-resistance fabric or high resistance textile, wherein the high resistance fabric layer is woven or knitted by a at least one conductive yarn 17a 17b, wherein the high resistance fabric layer comprises a predetermined textile structure, wherein a change of the textile structure caused by the lateral strain 11 causes a change in the resistance of the sublayer (8).

4. The tactile sensing system (1) according to one the previous claims, wherein
the plurality of electrodes (7) is arranged only along the edges (8a) of the sublayer (8) or the plurality of electrodes (7) is arranged in a grid structure on the sublayer (8), wherein the grid structure is in form of a two-dimensional Bravais lattice.

5. The tactile sensing system (1) according to one the previous claims, wherein
the third layer (6) is made of a conductive fabric or a conductive textile, wherein the conductivity of the third layer (6) is higher than the conductivity of the first layer (4) or the conductivity of the sublayer (8) of the first layer (4).

6. The tactile sensing system (1) according to one the previous claims, wherein
the second layer (5) is deformable along the normal axis Z, wherein the at least one contact force (10) along the normal axis Z acts on at least one contact area (9) of the second layer (5), wherein the second layer (5) is deformed essentially within the at least one contact area (9), wherein due to said at least one deformation at least one distance (12) along the normal axis Z between the first layer (4) and the third layer (6) is decreased at least within the at least one contact area (9), wherein said at least one deformation results in an increase of the conductivity between the first layer (4) and the third layer (6), which is essentially restricted to the extent of the at least one contact area (9) along a length axis X and a width axis Y, wherein the second layer (5) comprises piezoresistive characteristics with regard to the at least one contact force (10) along the normal axis Z.

7. The tactile sensing system (1) according to claim 6, wherein
the second layer (5) comprises a porous structure in particular a conductive foam and/or a piezoresistive material and/or a nanocomposite and/or a tunneling material.

8. The tactile sensing system (1) according to one of the previous claims, wherein.
the plurality of electrodes (7) of the first layer (4) and the third layer (6) form an electrode group, wherein each member of the electrode group is electrically connected to a multiplexer unit (13) of the detection unit (3), wherein, by the multiplexer unit (13), at least one first subset of the members of the electrode group may be connected to at least one current or voltage source (14), wherein by the multiplexer unit (13), at least one second subset of the members of the electrode group may be electrically connected to a detection device (15).

9. The tactile sensing system (1) according to one of the previous claims, wherein between the first layer (4) and the second layer (5) an adhesive (16) is applied preferably at sparse points, wherein between the second layer (5) and the third layer (6) an adhesive (16) is applied preferably at sparse points.

10. An autonomous system (100), in particular a robot comprising the tactile sensing system (1) according to one of the previous claims.

11. The autonomous system according to claim 10 comprising a component (101) with an outer skin (102), wherein the outer skin 102 comprises the sensor component (2).

12. Method to operate a tactile sensing system (1) according to one of the claims 1 to 9 and to simultaneously detect at least one contact force (10) along the normal axis Z and at least one lateral strain (11), comprising the following steps

  a) providing a first mapping function for detecting the at least one contact force (10) along the normal axis Z and providing a second mapping function for detecting the at least one lateral strain (11);
  b) connecting the third layer (6) a first subset of electrodes (7) of the first layer (4) with a current or voltage source (14), such that in case the at least one contact force (10) along the normal axis Z acts on the sensor component (2) a current flows between the first subset of electrodes (7) and the third layer (6) and measuring the voltage of a second subset of electrodes (7);
  c) measuring a voltage between a second subset of electrodes (7) and the third layer (6) and/or between the electrodes of the second subset of electrodes (7);
  d) connecting a third subset of electrodes (7) of the first layer (4) with a current or voltage source (14) such that a current flows between predetermined electrodes (7) of the third subset of electrodes (7);

e) measuring the voltage between the electrodes of the fourth subset of electrodes (7);
f) applying the first mapping function and the second mapping function on the measured voltages and obtaining the force distribution resulting from the at least one acting contact force (10) along the normal axis Z and the at least one lateral strain (11).

**13.** Method according to claim 11, wherein
before step f) the following step is performed
repeating the steps b) to e) for a preset number of iterations, wherein for each iteration a different first subset of electrodes, second subset of electrodes, third subset of electrodes and fourth subset of electrodes is chosen.

**14.** Method according to one of the claims 11 to 12, wherein
the first preferably linear mapping function is generated by a simulation method comprising the following steps using a current flow perturbation:

a) Define the geometry and resistivity of the sensor component (2), wherein the area of the third layer (6) is divided into a preset number the perturbation locations x;
b) Define the geometry of the plurality of electrodes (7) in the first layer (4);
c) Create a top electrode on a predefined perturbing location x on the third layer (6);
d) Discretize the geometry of the sensor component (2) and the plurality of electrodes (7) into mesh elements;
e) Define current injection including the top electrode;
f) Run simulation;
g) Save simulated voltage values;
h) Repeat steps c) to g) for all predetermined locations x of the third layer (6);
i) Generate the first preferably linear mapping function for detecting the at least one contact force (10) along the normal axis Z.

**15.** Method according to one of the claims 11 to 13, wherein
the second preferably linear mapping function is generated by a simulation method comprising the following steps

a) Define the geometry and resistivity of the sensor component, wherein the area of the first layer (4) is divided into a preset number the perturbation locations r;
b) Define the geometry of the plurality of electrodes (7) in the first layer (4);
c) Discretize the geometry of the sensor component (2) and the plurality of electrodes (7) into mesh elements;
d) Define current injection only from the plurality of electrodes (7) in the first layer (4);
e) Change the resistances of the mesh elements on a perturbing location r in the first layer;
f) Run simulation;
g) Save simulated voltage values;
h) Repeat steps e) to g) for all predetermined locations r of the first layer (4);
i) Generate the second preferably linear mapping function for detecting the at least one lateral strain (11).

**Amended claims in accordance with Rule 137(2) EPC.**

**1.** A tactile sensing system (1) having a sensor component (2) which comprises a plurality of layers (4, 5, 6) stacked along a normal axis (Z) and a detection unit (3) electrically connected to the sensor component (2),
**characterized in that**
the sensor component (2) comprises a first layer (4), designed as a piezoresistive layer, a third layer (6), designed as a conductive layer which is electrically connected to the detection unit (2), and a second layer (5), designed as a spacing layer between the first layer (4) and the third layer (6), wherein the first layer (4) comprises a plurality of electrodes (7) electrically connected to the detection unit (3), wherein at least one contact force (10) along the normal axis (Z) on the sensor component (2) is detectable by the detection unit (3) due to a change of a current distribution between the first layer (4) and the third layer (6), wherein at least one lateral strain (11) on the sensor component (2) is detectable by the detection unit (3) due to a change of the resistance distribution change in the piezoresistive first layer (4), wherein the second layer (5) is deformable along the normal axis (Z), wherein the second layer (5) is, in a not deformed state, essentially insulating with regard to a current between the first layer (4) and the third layer (6), wherein in a deformed state of the second layer (5) a current flow between the first layer (4) and the second layer (5) is possible.

2. The tactile sensing system (1) according to claim 1, wherein
the first layer (4) comprises a sublayer (8) which has piezoresistive properties, wherein
the sublayer (8) comprises a conductive fabric and/or a conductive ink and/or carbon and/or carbon nanotubes and/or graphene and/or intrinsically conducting polymers, wherein the plurality of electrodes (7) of the first layer (4) is electrically connected to said sublayer (8).

3. The tactile sensing system (1) according to claim 2, wherein
the conductivity of said sublayer (8) is lower than the conductivity of the plurality of electrodes (7), wherein the sublayer (8) consists of a high-resistance fabric or high resistance textile, wherein the high resistance fabric layer is woven or knitted by a at least one conductive yarn (17a, 17b), wherein the high resistance fabric layer comprises a predetermined textile structure, wherein a change of the textile structure caused by the lateral strain (11) causes a change in the resistance of the sublayer (8).

4. The tactile sensing system (1) according to one of the previous claims, wherein
the plurality of electrodes (7) is arranged only along the edges (8a) of the sublayer (8) or the plurality of electrodes (7) is arranged in a grid structure on the sublayer (8), wherein the grid structure is in form of a two-dimensional Bravais lattice.

5. The tactile sensing system (1) according to one of the previous claims, wherein
the third layer (6) is made of a conductive fabric or a conductive textile, wherein the conductivity of the third layer (6) is higher than the conductivity of the first layer (4) or the conductivity of the sublayer (8) of the first layer (4).

6. The tactile sensing system (1) according to one of the previous claims, wherein the at least one contact force (10) along the normal axis Z acts on at least one contact area (9) of the second layer (5), wherein the second layer (5) is deformed essentially within the at least one contact area (9), wherein due to said at least one deformation at least one distance (12) along the normal axis Z between the first layer (4) and the third layer (6) is decreased at least within the at least one contact area (9), wherein said at least one deformation results in an increase of the conductivity between the first layer (4) and the third layer (6), which is essentially restricted to the extent of the at least one contact area (9) along a length axis X and a width axis Y, wherein the second layer (5) comprises piezoresistive characteristics with regard to the at least one contact force (10) along the normal axis Z.

7. The tactile sensing system (1) according to claim 6, wherein
the second layer (5) comprises a porous structure in particular a conductive foam and/or a piezoresistive material and/or a nanocomposite and/or a tunneling material.

8. The tactile sensing system (1) according to one of the previous claims, wherein.
the plurality of electrodes (7) of the first layer (4) and the third layer (6) form an electrode group, wherein each member of the electrode group is electrically connected to a multiplexer unit (13) of the detection unit (3), wherein, by the multiplexer unit (13), at least one first subset of the members of the electrode group may be connected to at least one current or voltage source (14), wherein by the multiplexer unit (13), at least one second subset of the members of the electrode group may be electrically connected to a detection device (15).

9. The tactile sensing system (1) according to one of the previous claims, wherein between the first layer (4) and the second layer (5) an adhesive (16) is applied preferably at sparse points, wherein between the second layer (5) and the third layer (6) an adhesive (16) is applied preferably at sparse points.

10. An autonomous system (100), in particular a robot comprising the tactile sensing system (1) according to one of the previous claims.

11. The autonomous system according to claim 10 comprising a component (101) with an outer skin (102), wherein the outer skin 102 comprises the sensor component (2).

12. Method to operate a tactile sensing system (1) according to one of the claims 1 to 9 and to simultaneously detect at least one contact force (10) along the normal axis Z and at least one lateral strain (11), comprising the following steps

    a) providing a first mapping function for detecting the at least one contact force (10) along the normal axis (Z) and providing a second mapping function for detecting the at least one lateral strain (11);
    b) connecting the third layer (6) and a first subset of electrodes (7) of the first layer (4) with a current or voltage source (14), such that in case the at least one contact force (10) along the normal axis (Z) acts on the sensor component (2) a current flows between the first subset of electrodes (7) and the third layer (6) connected by the second layer (5), and measuring the voltage of a second subset of electrodes (7);

c) measuring a voltage between a second subset of electrodes (7) and the third layer (6) and/or between the electrodes of the second subset of electrodes (7);

d) connecting a third subset of electrodes (7) of the first layer (4) with a current or voltage source (14) such that a current flows between predetermined electrodes (7) of the third subset of electrodes (7);

e) measuring the voltage between the electrodes of the fourth subset of electrodes (7);

f) applying the first mapping function and the second mapping function on the measured voltages and obtaining the force distribution resulting from the at least one acting contact force (10) along the normal axis Z and the at least one lateral strain (11).

**13.** Method according to claim 11, wherein
before step f) the following step is performed
repeating the steps b) to e) for a preset number of iterations, wherein for each iteration a different first subset of electrodes, second subset of electrodes, third subset of electrodes and fourth subset of electrodes is chosen.

**14.** Method according to one of the claims 11 to 12, wherein
the first preferably linear mapping function is generated by a simulation method comprising the following steps using a current flow perturbation:

a) Define the geometry and resistivity of the sensor component (2), wherein the area of the third layer (6) is divided into a preset number the perturbation locations x;

b) Define the geometry of the plurality of electrodes (7) in the first layer (4);

c) Create a top electrode on a predefined perturbing location x on the third layer (6);

d) Discretize the geometry of the sensor component (2) and the plurality of electrodes (7) into mesh elements;

e) Define current injection including the top electrode;

f) Run simulation;

g) Save simulated voltage values;

h) Repeat steps c) to g) for all predetermined locations x of the third layer (6);

i) Generate the first preferably linear mapping function for detecting the at least one contact force (10) along the normal axis Z.

**15.** Method according to one of the claims 11 to 13, wherein
the second preferably linear mapping function is generated by a simulation method comprising the following steps

a) Define the geometry and resistivity of the sensor component, wherein the area of the first layer (4) is divided into a preset number the perturbation locations r;

b) Define the geometry of the plurality of electrodes (7) in the first layer (4);

c) Discretize the geometry of the sensor component (2) and the plurality of electrodes (7) into mesh elements;

d) Define current injection only from the plurality of electrodes (7) in the first layer (4);

e) Change the resistances of the mesh elements on a perturbing location r in the first layer;

f) Run simulation;

g) Save simulated voltage values;

h) Repeat steps e) to g) for all predetermined locations r of the first layer (4);

i) Generate the second preferably linear mapping function for detecting the at least one lateral strain (11).

Fig. 1a

Fig. 1b

Fig. 2

Fig. 3

**Fig. 4**

**Fig. 5a**

No contact case: no current flow

**Fig. 5b**

Contact case: current flow

**Fig. 6a**

Initial status

**Fig. 6b**  Case 1: Out-of-plane bending

Resistance change

**Fig. 6c**

Resistance change

Case 2: Lateral stretch

Resistance network model

Continuum model

$$V = R(I)$$

Linear resistor network model

$$V = \mathbf{R} \cdot I$$

## Fig. 7a

## Fig. 7b

Contact sensing

Perturbation of current source position (x)

$$dV_{\text{current\_perturbation}} = \left.\frac{\partial \mathbf{R}(x)}{\partial x}\right|_{I=\text{const.}} \cdot dx$$

$$\mathbf{J}_{\text{current\_perturbation}} = \left.\frac{\partial \mathbf{R}(x)}{\partial x}\right|_{I=\text{const.}}$$

## Fig. 8

Lateral strain sensing

Perturbation of a resistance (r)

$$dV_{\text{resistance\_perturbation}} = \left.\frac{\partial \mathbf{R}(r)}{\partial r}\right|_{I=\text{const.}} \cdot dr$$

$$\mathbf{J}_{\text{resistance\_perturbation}} = \left.\frac{\partial \mathbf{R}(r)}{\partial r}\right|_{I=\text{const.}}$$

## Fig. 9

Boundary electrodes

Fig. 10a

Distributed electrodes

Fig. 10b

Boundary electrodes

Distributed electrodes

Fig. 11

Fig. 12

**Current flow perturbation**

a) Define sensor geometry and resistivity

b) Define bottom electrode geometry

c) Create a top electrode on the perturbating location

d) Discretize the sensor and electrode geometry into mesh elements

Define current injection including the top electrode  e)

Run simulation  f)

Save voltage measurements  g)

Change perturbating location

No — Perturbed every location?

h)

Yes — End

**Fig. 13a**

**Resistance perturbation**

a) Define sensor geometry and resistivity

b) Define bottom electrode geometry

c) Discretize the sensor and electrode geometry into mesh elements

d) Define current injection only from the bottom electrodes

e) Change the resistances of the mesh elements on the perturbating location

Run simulation  f)

Save voltage measurements  g)

Change perturbating location

No — Perturbed every location?

h)

Yes — End

**Fig. 13b**

Contact and bending situation

10

Force1  Force2

Bending

2  11  10

Voltage measurements ($V_{contact}$ and $V_{strain}$)

$V_{contact}$  $V_{strain}$

$J^{-1}_{current\_perturbation}$

$J^{-1}_{resistance\_perturbation}$

Contact sensing

Bending sensing

**Fig. 14**

Surface of the strain-sensitive textile from am microscope

**Fig. 15a**

Stretched

**Fig. 15b**

Resistance change mechanism of the strain-sensitive textile

17a

Conductive Yam Groupe 1

Conductive Yam Groupe 2

17b    18

**Fig. 15c**

17a

18

17b    New connections

Stretched

**Fig. 15d**

Surface of the conductive foam from a microscope

**Fig. 16a**

Press →

Z
→X,Y

19

Contact area increase

Fig. 16c

Z
→X,Y

Fig. 16b

20

19

Before press

After press

Fig. 17

Fig. 18

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/113410 A1 (YOO BYUNGSEOK [US] ET AL) 18 April 2019 (2019-04-18) * figures 6C,6E,6G,7A,7B,7C * * paragraphs [0048], [0075], [0076], [0078], [0097], [0099] * ----- | 1-15 | INV.<br>G01L5/22<br>G01L1/18<br>B25J13/08<br>G01L1/20<br>G01L5/162 |
| A | US 2015/331523 A1 (MCMILLEN KEITH A [US]) 19 November 2015 (2015-11-19) * paragraph [0093] * ----- | 1-15 | |

TECHNICAL FIELDS
SEARCHED     (IPC)

G01L
B25J

The present search report has been drawn up for all claims

| Place of search | Date of completion of the search | Examiner |
|---|---|---|
| The Hague | 26 May 2021 | Kaiser, Jean-Luc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                      

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 00 0480

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2021

| Patent document cited in search report | | Publication date | Patent family member(s) | | Publication date |
|---|---|---|---|---|---|
| US 2019113410 | A1 | 18-04-2019 | NONE | | |
| US 2015331523 | A1 | 19-11-2015 | US | 2015331523 A1 | 19-11-2015 |
| | | | US | 2015331524 A1 | 19-11-2015 |
| | | | US | 2017212638 A1 | 27-07-2017 |

EPO FORM P0459

For more details about this annex : see Official Journal of the European Patent Office, No. 12/82